(19) **Europäisches Patentamt / European Patent Office / Office européen des brevets**

(11) **EP 4 614 412 A1**

(12) # EUROPEAN PATENT APPLICATION

(43) Date of publication:
**10.09.2025 Bulletin 2025/37**

(21) Application number: **25153980.5**

(22) Date of filing: **25.01.2025**

(51) International Patent Classification (IPC):
***G06Q 10/0639*** (2023.01)   ***G06Q 10/067*** (2023.01)

(52) Cooperative Patent Classification (CPC):
**G06Q 10/06393; G06N 20/00; G06Q 10/067**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.03.2024 IN 202421016967**

(71) Applicant: **Tata Consultancy Services Limited Maharashtra (IN)**

(72) Inventors:
- **BALAKRISHNAN, Tejan London, SW1X 7HS (GB)**
- **MOHLA, Ankush Edison, NJ 08837 (US)**

(74) Representative: **Goddar, Heinz J. Boehmert & Boehmert Anwaltspartnerschaft mbB Pettenkoferstrasse 22 80336 München (DE)**

(54) **METHOD AND SYSTEM FOR INNOVATION VELOCITY MEASUREMENT**

(57)   Due to lack of a standardized measurement system, it has become hard for organizations to identify the true reflection of the impact of the innovation. In conventional methods mainly utilize statistical methods for estimating enterprise innovation based on likelihood and are not effective. The present disclosure initially identifies a plurality of potential Key Performance Indicators (KPIs) from multidimensional data. Further, a plurality of relevant KPIs is selected for computing a raw innovation factor and a scaled innovation score is computed for each of the plurality of enterprise accounts by applying a set of pre-defined normalization rules. Further, a plurality of similar enterprise accounts is identified, and a plurality of recommendations are generated. Furthermore, a dynamic coefficient associated with each of the plurality of relevant KPIs are updated. Finally, an innovation score percentile is computed for each of the plurality of enterprise accounts based on an updated dynamic coefficient.

FIG. 1B

**Description**

CROSS-REFERENCE TO RELATED APPLICATIONS AND PRIORITY

The present application claims priority to Indian application no. 202421016967, filed on March 8, 2024.

TECHNICAL FIELD

The disclosure herein generally relates to the field of data analytics and, more particularly, to a method and system for innovation velocity measurement.

BACKGROUND

Organizations are increasing their investment in research and development and there is tremendous focus around building strong research and innovation teams. However, due to lack of a standardized measurement system, it has become hard for organizations to get the true reflection of the impact of innovation. Moreover, in large organizations sometimes the presence of siloed teams tasked with innovation activities has resulted in an "innovation divide" with different teams focusing on narrow innovation goals without tying back to the broader enterprise innovation vision. In some cases, this has led to innovation teams burdened with "innovation co-ordination" tasks rather than tangible "real" innovation, leading to redundant efforts in navigating the path, overheads in driving participation, and superficial innovation with higher amplification replacing genuine innovation in action. Conventional methods mainly utilize statistical methods for estimating enterprise innovation based on likelihood. Further no recommendations are generated in conventional systems. Hence the conventional methods are not as effective. Hence there is a need to develop a system to provide dynamic recommendations with high accuracy.

SUMMARY

Embodiments of the present disclosure present technological improvements as solutions to one or more of the above-mentioned technical problems recognized by the inventors in conventional systems. For example, in one embodiment, a method for innovation velocity measurement is provided. The method includes receiving, by one or more hardware processors, a multidimensional data pertaining to a plurality of enterprise accounts, wherein the multidimensional data comprises at least one of a set of structured data and a set of unstructured data. Further, the method includes identifying, by the one or more hardware processors, a plurality of potential Key Performance Indicators (KPIs) by mapping a plurality of predefined KPIs with the multidimensional data. Furthermore, the method includes selecting, by the one or more hardware processors, a plurality of relevant KPIs associated with each of the plurality of enterprise accounts from among a plurality of potential KPIs using a classification technique, wherein each of the plurality of relevant KPIs are associated with a dynamic coefficient, wherein the dynamic coefficient is updated based on context and focus of the plurality of enterprise accounts. Furthermore, the method includes computing, by the one or more hardware processors, a raw innovation factor for each of the plurality of enterprise accounts based on a weighted score associated with each of the corresponding plurality of relevant KPIs and the dynamic coefficient associated with each of the plurality of relevant KPIs. Furthermore, the method includes computing, by the one or more hardware processors, a scaled innovation score for each of the plurality of enterprise accounts by applying a set of pre-defined normalization rules on the corresponding raw innovation factor, wherein the set of pre-defined normalization rules for each of the plurality of enterprise accounts are generated based on size, headcount and revenue associated with a corresponding enterprise account. Furthermore, the method includes identifying, by the one or more hardware processors, a plurality of similar enterprise accounts corresponding to each of the plurality of enterprise accounts based on the corresponding scaled innovation score using an Euclidean distance based approach. Furthermore, the method includes generating, by the one or more hardware processors, a plurality of recommendations comprising a first set of insights, a second set of insights and a third set of insights to a user based on the plurality of similar enterprise accounts corresponding to each of the plurality of enterprise accounts. Furthermore, the method includes updating, by the one or more hardware processors, the dynamic coefficient associated with each of the plurality of relevant KPIs associated with each of the plurality of enterprise accounts by: (i) obtaining a self-learning control factor configured for each of the plurality of enterprise accounts, wherein the self-learning control factor is either one or zero (ii) computing a moving average of the plurality of relevant KPIs associated with the plurality of similar accounts (iii) computing a current delta dynamic coefficient for each of the plurality of similar accounts based on the moving average and (iv) updating the dynamic coefficient associated with each of the plurality of relevant KPIs of the plurality of enterprise accounts using a self-learning auto correlation if the current delta dynamic coefficient is greater than zero, wherein the self-learning auto correlation is calculated from the current delta dynamic coefficient and the self-learning control factor. Finally, the method includes computing, by the one or more hardware processors, an innovation score percentile for each of the plurality of enterprise accounts based on an updated dynamic coefficient associated with each of the plurality of relevant KPIs.

In another aspect, a system for innovation velocity measurement is provided. The system includes at least one memory storing programmed instructions, one or more Input /Output (I/O) interfaces, and one or more hardware processors operatively coupled to the at least one memory, wherein the one or more hardware processors are configured by the programmed instructions to receive a multidimensional data pertaining to a plurality of enterprise accounts, wherein the multidimensional data comprises at least one of a set of structured data and a set of unstructured data. Further, the one or more hardware processors are configured by the programmed instructions to identify a plurality of potential Key Performance Indicators (KPIs) by mapping a plurality of predefined KPIs with the multidimensional data. Furthermore, the one or more hardware processors are configured by the programmed instructions to select a plurality of relevant KPIs associated with each of the plurality of enterprise accounts from among a plurality of potential KPIs using a classification technique, wherein each of the plurality of relevant KPIs are associated with a dynamic coefficient, wherein the dynamic coefficient is updated based on context and focus of the plurality of enterprise accounts. Furthermore, the one or more hardware processors are configured by the programmed instructions to compute, a raw innovation factor for each of the plurality of enterprise accounts based on a weighted score associated with each of the corresponding plurality of relevant KPIs and the dynamic coefficient associated with each of the plurality of relevant KPIs. Furthermore, the one or more hardware processors are configured by the programmed instructions to compute a scaled innovation score for each of the plurality of enterprise accounts by applying a set of pre-defined normalization rules on the corresponding raw innovation factor, wherein the set of pre-defined normalization rules for each of the plurality of enterprise accounts are generated based on size, headcount and revenue associated with a corresponding enterprise account. Furthermore, the one or more hardware processors are configured by the programmed instructions to identify a plurality of similar enterprise accounts corresponding to each of the plurality of enterprise accounts based on the corresponding scaled innovation score using an Euclidean distance based approach. Furthermore, the one or more hardware processors are configured by the programmed instructions to generate a plurality of recommendations comprising a first set of insights, a second set of insights and a third set of insights to a user based on the plurality of similar enterprise accounts corresponding to each of the plurality of enterprise accounts. Furthermore, the one or more hardware processors are configured by the programmed instructions to update the dynamic coefficient associated with each of the plurality of relevant KPIs associated with each of the plurality of enterprise accounts by: (i) obtaining a self-learning control factor configured for each of the plurality of enterprise accounts, wherein the self-learning control factor is either one or zero (ii) computing a moving average of the plurality of relevant KPIs associated with the plurality of similar accounts (iii) computing a current delta dynamic coefficient for each of the plurality of similar accounts based on the moving average and (iv) updating the dynamic coefficient associated with each of the plurality of relevant KPIs of the plurality of enterprise accounts using a self-learning auto correlation if the current delta dynamic coefficient is greater than zero, wherein the self-learning auto correlation is calculated from the current delta dynamic coefficient and the self- learning control factor. Finally, the one or more hardware processors are configured by the programmed instructions to compute an innovation score percentile for each of the plurality of enterprise accounts based on an updated dynamic coefficient associated with each of the plurality of relevant KPIs.

In yet another aspect, a computer program product including a non-transitory computer-readable medium having embodied therein a computer program for innovation velocity measurement is provided. The computer readable program, when executed on a computing device, causes the computing device to receive a multidimensional data pertaining to a plurality of enterprise accounts, wherein the multidimensional data comprises at least one of a set of structured data and a set of unstructured data. Further, the computer readable program, when executed on a computing device, causes the computing device to identify a plurality of potential Key Performance Indicators (KPIs) by mapping a plurality of predefined KPIs with the multidimensional data. Furthermore, the computer readable program, when executed on a computing device, causes the computing device to select a plurality of relevant KPIs associated with each of the plurality of enterprise accounts from among a plurality of potential KPIs using a classification technique, wherein each of the plurality of relevant KPIs are associated with a dynamic coefficient, wherein the dynamic coefficient is updated based on context and focus of the plurality of enterprise accounts. Furthermore, the computer readable program, when executed on a computing device, causes the computing device to compute, a raw innovation factor for each of the plurality of enterprise accounts based on a weighted score associated with each of the corresponding plurality of relevant KPIs and the dynamic coefficient associated with each of the plurality of relevant KPIs. Furthermore, the computer readable program, when executed on a computing device, causes the computing device to compute a scaled innovation score for each of the plurality of enterprise accounts by applying a set of pre-defined normalization rules on the corresponding raw innovation factor, wherein the set of pre-defined normalization rules for each of the plurality of enterprise accounts are generated based on size, headcount and revenue associated with a corresponding enterprise account. Furthermore, the computer readable program, when executed on a computing device, causes the computing device to identify a plurality of similar enterprise accounts corresponding to each of the plurality of enterprise accounts based on the corresponding scaled innovation score using an Euclidean distance based approach. Furthermore, the computer readable program, when executed on a computing device, causes the computing device to generate a plurality of recommendations comprising a first set of insights, a second set of insights and a third set of insights to a user based on the plurality of similar enterprise accounts corresponding to each of the plurality of enterprise accounts. Furthermore, the computer readable program, when executed on a computing device, causes the computing device to update the dynamic coefficient associated with each of the plurality of relevant KPIs associated with each of the plurality of enterprise accounts by: (i) obtaining a self-learning control factor configured for each of the plurality of enterprise accounts, wherein the self-learning control factor is either one or zero (ii) computing a moving average of the plurality of relevant KPIs associated with the plurality of similar accounts (iii) computing a current delta dynamic coefficient for each of the plurality of similar accounts based on the moving average and (iv) updating the dynamic coefficient associated with each of the plurality of relevant KPIs of the plurality of enterprise accounts using a self-learning auto correlation if the current delta dynamic coefficient is greater than zero, wherein the self-learning auto correlation is calculated from the current delta dynamic coefficient and the self- learning control factor. Finally, the computer readable program, when executed on a computing device, causes the computing device to compute an innovation score percentile for each of the plurality of enterprise accounts based on an updated dynamic coefficient associated with each of the plurality of relevant KPIs.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A is a functional block diagram of a system for innovation velocity measurement, in accordance with some embodiments of the present disclosure.

FIG. 1B illustrates a broad level functional architecture for a processor implemented method for innovation velocity measurement, in accordance with some embodiments of the present disclosure.

FIG. 2 (FIG. 2A and FIG. 2B) illustrates a flow diagram for the processor implemented method for innovation velocity measurement, in accordance with some embodiments of the present disclosure.

FIG. 3 illustrates an example nearest neighbor classification diagram for the processor implemented method for innovation velocity measurement, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The critical role of innovation as a key driver in a competitive environment is widely acknowledged and understood today. However, enterprises are facing a major challenge in establishing a common vocabulary for innovation, in terms of what the nebulous concept of a "culture of innovation" means to different people within the organization, how "innovation intensity/velocity" can be defined and measured, and most importantly, how innovation can be co-related directly to tangible business outcomes.

Different business units or business functions have multiple varying attributes from - size, revenue, maturity, business performance & business priority. To name a few, all of which in combination have a significant influence on the level and type of innovation required to drive change whether it be through the lens of business growth or cost optimization. To handle this high degree of variability, it becomes critical to "normalize" innovation to provide a standardized lens to leadership in terms of how each of the businesses is driving innovation, the impact innovation efforts are creating, investment required and the levers to apply. With the increasing focus on innovation and the wide range of innovation levers available, there is a strong need for a systemic view providing a structured dynamic mechanism to measure progress and plan future actions. However, the challenge faced is the absence of any standard measure that considers the nuances of: (i) Multiple aspects of innovation, including a combination of "soft" (e.g. culture) and "hard" (e.g. revenue) factors. (ii) Ability to customize / tweak the measurement model (based on the context of the account - size, etc.) (iii) Ability to abstract innovation effectiveness / innovation intensity to a single, understandable number covering both the breadth and depth of innovation (iv) Leveraging the power of data to generate insights for a self-optimizing feedback loop for innovation initiatives

To overcome the challenges of the conventional approaches, embodiments herein provide a method and system for innovation velocity measurement. The present disclosure measures innovation intensity/velocity based on a wide

**EP 4 614 412 A1**

variety of dynamic attributes, each of which needs to be weighed dynamically as per the business context where it is being measured. Broadly, innovation depends on three dimensions: (i) Culture of an organization- It has been observed that 1% of people within the business unit who are seeing participating, that does not augur well for sustaining and creating impactful innovation, model need to factor in various aspects of the culture and show case to the management how strong is the foundation (ii) Positioning and Differentiation -Relevant solutions at the right time to the end customer would go a long way in ensuring the transformation in terms of growth or cost optimization and (iii) Outcomes. The present disclosure measures innovation velocity based on these three dimensions.

Initially, the system receives multidimensional data pertaining to a plurality of enterprise accounts and identifies a plurality of potential Key Performance Indicators (KPIs) by mapping a plurality of predefined KPIs with the multidimensional data. Further, a plurality of relevant KPIs is selected for computing a raw innovation factor for each of the plurality of enterprise accounts. Furthermore, a scaled innovation score is computed for each of the plurality of enterprise accounts by applying a set of pre-defined normalization rules on the corresponding raw innovation factor. Further, a plurality of similar enterprise accounts is identified, and a plurality of recommendations are generated. Furthermore, a dynamic coefficient associated with each of the plurality of relevant KPIs associated with each of the plurality of enterprise accounts are updated. Finally, an innovation score percentile is computed for each of the plurality of enterprise accounts based on an updated dynamic coefficient associated with each of the plurality of relevant KPIs.

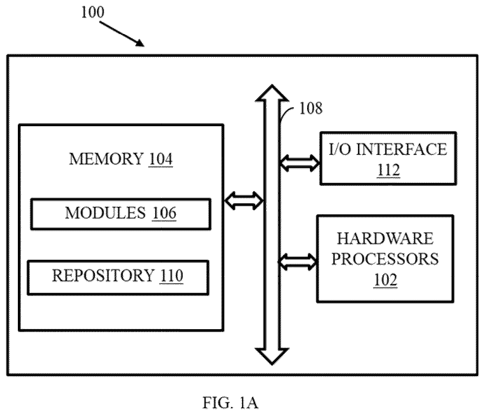

Referring now to the drawings, and more particularly to FIG. 1A through FIG. 3, where similar reference characters denote corresponding features consistently throughout the figures, there are shown preferred embodiments, and these embodiments are described in the context of the following exemplary system and/or method.

FIG. 1A is a functional block diagram of a system 100 for innovation velocity measurement, in accordance with some embodiments of the present disclosure. The system 100 includes or is otherwise in communication with hardware processors 102, at least one memory such as a memory 104, an Input /Output (I/O) interface 112. The hardware processors 102, memory 104, and the I/O interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 104 includes a plurality of modules 106. The memory 104 also includes a data repository (or repository) 110 for storing data processed, received, and generated by the plurality of modules 106.

The plurality of modules 106 include programs or coded instructions that supplement applications or functions performed by the system 100 for innovation velocity measurement. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for innovation velocity measurement.

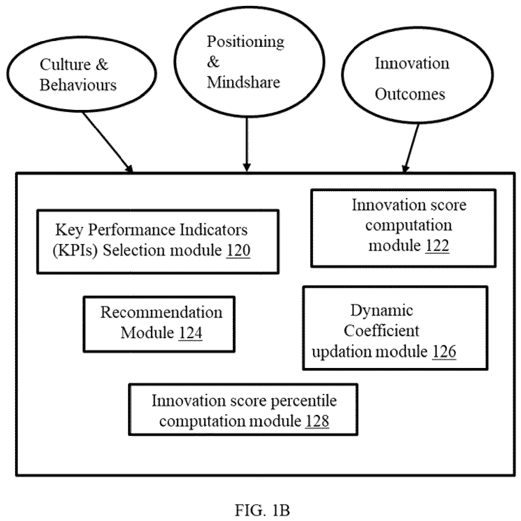

The data repository (or repository) 110 may include a plurality of abstracted piece of code for refinement and data that is processed, received, or generated as a result of the execution of the plurality of modules in the module(s) 106 as shown in FIG. 1B.

Although the data repository 110 is shown internal to the system 100, it will be noted that, in alternate embodiments, the data repository 110 can also be implemented external to the system 100, where the data repository

5

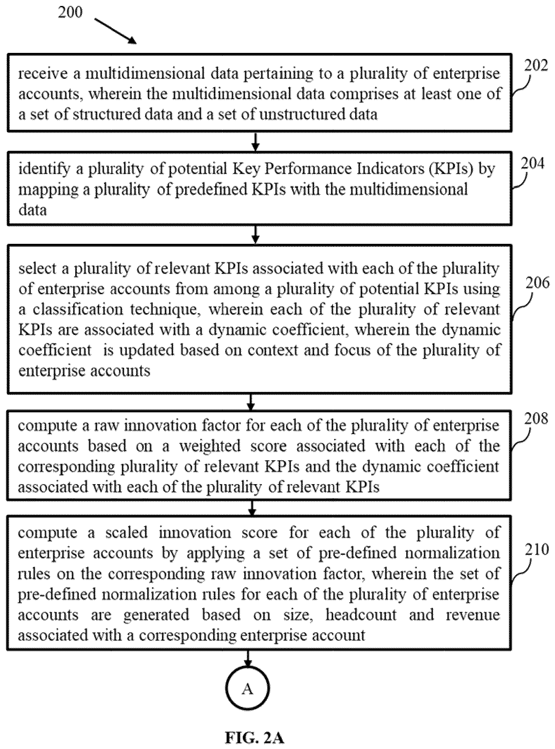

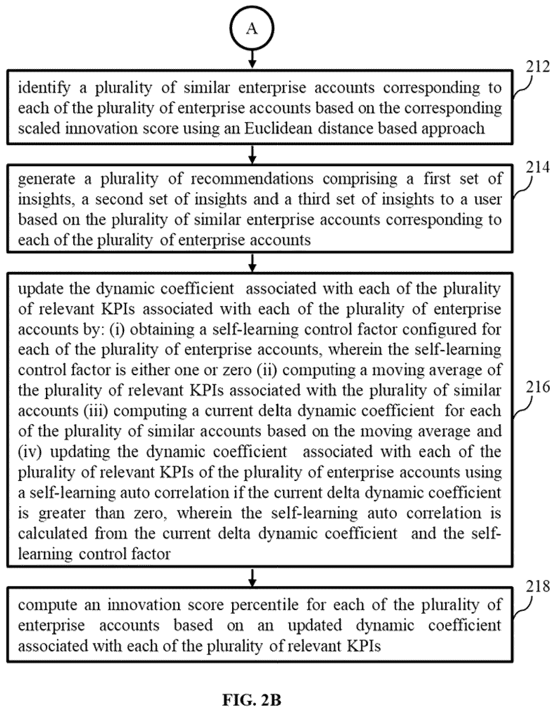

110 may be stored within a database (repository 110) communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). Working of the components of the system 100 are explained with reference to FIG. 1B and the method steps depicted in FIG. 2.

FIG. 1B illustrates a broad level functional architecture for a processor implemented method for innovation velocity measurement, in accordance with some embodiments of the present disclosure. Now referring to FIG. 1B, the multidimensional data pertaining to the plurality of enterprise accounts, for example, the "culture & behavioral" data, "positioning and mindshare" data and "Innovation outcome" are received initially. The plurality of potential Key Performance Indicators (KPIs) and the plurality of relevant KPIs are selected by a KPIs selection module 120 Further, the raw innovation factor and the scaled innovation score are computed by a innovation score computation module 122. Further, the plurality of similar enterprise accounts is identified, and a plurality of recommendations are generated by a recommendation module 124. Furthermore, the dynamic coefficient associated with each of the plurality of relevant KPIs associated with each of the plurality of enterprise accounts are updated by a dynamic coefficient updation module 126. Finally, the innovation score percentile is computed for each of the plurality of enterprise accounts based on an updated dynamic coefficient associated with each of the plurality of relevant KPIs by a innovation score percentile computation module 128.

The dynamic coefficient updation module 126 is a key module which updates the dynamic coefficient associated with each of the plurality of relevant KPIs associated with each of the plurality of enterprise accounts. Since the KPIs associated with each enterprise account varies over time, it is necessary to dynamically compute and update the dynamic coefficients associated with the KPIs/relevant KPIs.

FIG. 2 is an exemplary flow diagrams illustrating a method 200 for innovation velocity measurement implemented by the system of FIG. 1A according to some embodiments of the present disclosure. In an embodiment, the system 100 includes one or more data storage devices or the memory 104 operatively coupled to the one or more hardware processor(s) 102 and is configured to store instructions for execution of steps of the method 200 by the one or more hardware processors 102. The steps of the method 200 of the present disclosure will now be explained with reference to the components or blocks of the system 100 as depicted in FIG. 1A and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types. The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

At step 202 of the method 200, the one or more hardware processors 102 are configured by the programmed instructions to receive a multidimensional data pertaining to a plurality of enterprise accounts, wherein the multidimensional data comprises at least one of a set of structured data and a set of unstructured data. For example, the multidimensional data includes data associated with (i) culture and behavior (ii) positioning and mindshare and (iii) innovation outcomes of an enterprise. For example, the culture and behavior dimension include the following parameters (i) participation by innovation champions (ii) sharing, articulation and amplification (iii) Co-Innovation Ecosystem explored (iv) Innovation competition entries (v) IP creation attempted. Similarly, positioning and mindshare includes the following parameters (i) Proof of Concepts / Points of View (ii) Co-Innovation Ecosystem (COIN) customer mind-share (ii) COIN proposals/SoW (iii) enterprise AIC/IP customer mind-share (iv) enterprise AIC/IP proposals/SoW and (v) events like ideathon/hackathon/innovation day. Similarly, innovation outcomes dimension includes the following parameters (i) PoC/PoV revenue (ii) enterprise AIC/IP revenue (iii) COIN revenue (iv) IP granted (v) Innovation feedback and (vi) innovation press releases.

The multidimensional data is collected automatically from multiple enterprise systems. For example, Customer Relationship Management (CRM) system, Innovation Measurement System, Intellectual Property Rights Management System, Delivery Governance System, Innovation Collateral Repository, Sales & Marketing System, etc.

At step 204 of the method 200, the one or more hardware processors 102 are configured by the programmed instructions to identify a plurality of potential Key Performance Indicators (KPIs) by mapping a plurality of predefined KPIs with the multidimensional data.

For example, the following Table 1 indicate the KPIs mapped to different enterprise data sources.

Table 1

| Dimension | KPI | Data Source |
|---|---|---|
| Culture & Behaviours | Participation by Innovation Champions | Delivery Governance System |
| | Sharing, Articulation & Amplification | Innovation Portal |
| | COIN Explored | Innovation Tracking System |
| | Innovation competition Entries | Enterprise Ideation Portal |
| | IP Generation-Attempted | Intellectual Property Management System |
| Positioning & Mind-share | Proof of Concepts / Points of View | database |
| | COIN Customer Mind-share | database |
| | COIN Proposals / SoW | Customer Relationship Management System |
| | Enterprise Innovation Cloud / IP Customer Mind-share | database |
| | AIC / IP Proposals / SoW | Customer Relationship Management System |
| | Events - Ideathon / Hackathon / Inno Day | Innovation Tracking System |
| Innovation Outcomes | Proof of Concepts / Points of View Revenue | Customer Relationship Management System |
| | Enterprise Innovation Cloud / IP Revenue | Customer Relationship Management System |
| | COIN Revenue | Customer Relationship Management System |
| | IP Generation - Granted | Intellectual Property Management System |
| | Customer Satisfaction Index / Lifeline Innovation Feedback | Customer Survey & Feedback System |
| | Innovation Press Release | Delivery Governance System - Marketing module |

At step 206 of the method 200, the one or more hardware processors 102 are configured by the programmed instructions to select a plurality of relevant KPIs associated with each of the plurality of enterprise accounts from among a plurality of potential KPIs using a classification technique, wherein each of the plurality of relevant KPIs are associated with a dynamic coefficient.

For example, contextual intelligence is used to select only the relevant data items/KPIs. This can be based on automated classification of the relevance of the underlying data (e.g. use AI/ML to classify relevance (High/Medium/Low) of a particular Proof of Concept / Point of View (PoC/PoV) being reported under innovation) and trigger an approval workflow for items tagged as Low/Medium relevance. For example, for a PoC / PoV around "ERP Process Automation" might be categorized as "Medium" whereas a PoC / PoV around Generative AI might be categorized as "High".

At step 208 of the method 200, the one or more hardware processors 102 are configured by the programmed instructions to compute a raw innovation factor (formula given in equation 1) for each of the plurality of enterprise accounts based on a weighted score associated with each of the corresponding plurality of relevant KPIs and the dynamic coefficient associated with each of the plurality of relevant KPIs. The dynamic coefficient is updated based on context and focus of the plurality of enterprise accounts. Now referring to equation 1, the 'C' is the dynamic coefficient and 'K' is the weighted score. The dynamic coefficient is customized based on context. Similarly, the KPIs can be customized as per the context of a model deployment.

$$IFactor = \sum_{i=1}^{3} \sum_{i=1}^{n} (C_{ij} * K_{ij}) \dots\dots\dots\dots\dots\dots\dots\dots(1)$$

For example, in a context where the focus is on setting up an innovation culture, the underlying KPIs related to culture (e.g. participation, collaboration exploration, etc.) can be accentuated whereas in a context where the foundations have already been laid and the focus is now on increasing positioning and gaining mindshare, the dynamic coefficients relevant to those KPIs can be weighted higher. Additionally, it is envisaged that the dynamic coefficients can be fine-tuned / optimized over time on the basis of system and process learning as part of the system's insight generation process.

At step 210 of the method 200, the one or more hardware processors 102 are configured by the programmed instructions to compute a scaled innovation score (using equation 2) for each of the plurality of enterprise accounts by applying a set of pre-defined normalization rules on the corresponding raw innovation factor, wherein the set of pre-defined normalization rules for each of the plurality of enterprise accounts are generated based on size, headcount and revenue associated with a corresponding enterprise account.

$$Scaled\ IFactor = N(IFactor_{raw})\dots\dots\dots\dots\dots\dots\dots(2)$$

At step 212 of the method 200, the one or more hardware processors 102 are configured by the programmed instructions to identify a plurality of similar enterprise accounts corresponding to each of the plurality of enterprise accounts based on the corresponding scaled innovation score using an Euclidean distance based approach.

### *Pseudocode to identify a plurality of similar enterprise accounts:*

*Identify "Golden Cohort" G of most-similar accounts based on Similarity-Search:*

*$di = d(a, x_i)$ -> Euclidean distance between account a and account*

*$x_i$ based on multiple attributes like industry, size and geography*

*For N-nearest neighbors based on $d_i$,*

*add $x_i$ to G*

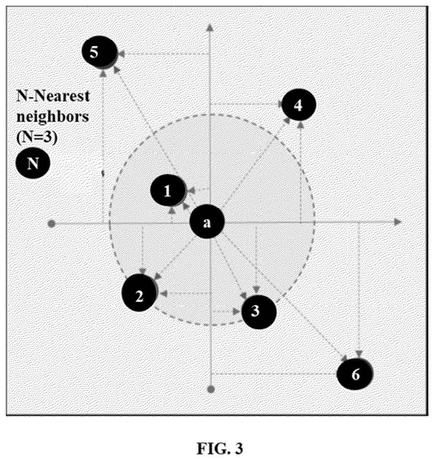

To identify the Golden Cohort/ the plurality of similar enterprise accounts, the Euclidean distance between account a and account $x_i$ based on multiple attributes like industry, size and geography is considered and the "N-nearest" neighbors are considered for inclusion in the final Golden Cohort. As an example, FIG. 3 illustrates that accounts 1, 2 and 3 are included whereas accounts 4, 5 and 6 are discarded.

At step 214 of the method 200, one or more hardware processors 102 are configured by the programmed instructions to generate a plurality of recommendations comprising a first set of insights, a second set of insights and a third set of insights to a user based on the plurality of similar enterprise accounts corresponding to each of the plurality of enterprise accounts.

The recommendation includes providing quantified visibility (e.g. comparative dashboard) and qualitative recommendations (e.g. whitespace insights) to enable executive review and decision-making around innovation. For example, for an enterprise account that has a low Innovation factor, the present disclosure provides a clear direction of where efforts can be focused. On the other hand, for an enterprise account that already has a healthy innovation score, the insights/recommendations based on initiatives that have worked with similar accounts can provide directional guidance.

The steps for generating the plurality of recommendations including the first set of insights, the second set of insights and the third set of insights to the user based on the plurality of similar enterprise accounts corresponding to each of the plurality of enterprise accounts comprises: (i) computing a first delta KPI for each of the plurality of similar enterprise accounts based on a comparison between the dynamic coefficient associated with each of the plurality of relevant KPIs corresponding to each of the plurality of enterprise accounts and the dynamic coefficient associated with each of the plurality of relevant KPIs corresponding to each of the plurality of similar enterprise accounts (ii) generating the first set of insights by including a contributing factor associated with the relevant KPIs of corresponding plurality of similar accounts having if the first delta KPI is greater than a predefined first threshold. For example, consider an account X which is identified as part of the "Golden Cohort" based on the similarity of industry, size and geography to account *a*. While comparing the KPIs, the algorithm finds that certain PoCs and PoVs have been positioned to X and received a lot of interest, but these are found lacking for account *a*. This category of insights would typically have a high degree of confidence and hence categorized as "Emulate" category of recommendation (iii) computing a second delta KPI for each of the plurality of enterprise accounts in a plurality of timelines based on a comparison between the dynamic coefficient associated with the corresponding relevant KPI in each of a plurality of historic timelines and the dynamic coefficient associated with the corresponding relevant KPI at current timeline (iv) generating the second set of insights/temporal insights by including a contributing factor associated with the relevant KPIs of corresponding to each of the plurality of historic timelines if the second delta KPI is greater than a predefined second threshold. For example, the algorithm for generating the second set of insights finds that the Participation & Exploration KPIs under the Culture dimension have dipped significantly over the past 2 quarters as compared to the same period the previous year. This insight would trigger an "Evaluate" action to the account team to check what the reason for the same is and enable them to take appropriate remedial action (v) generating the third set of insights based on a plurality of attributes using a generative Artificial Intelligence (GenAI) based approach, wherein the plurality of attributes comprises industry type, market, technology trends, competitive landscape, geography, business priorities, innovation ecosystem. For example, considering an account $a$ is an Industrial Manufacturer based in UK operating in the Oil & Gas industry. The AI-powered Idea Collection Agent might find that a different organization which has a very similar profile but operating in the North America region is exploring a new business model with its suppliers and hence, this idea gets added to the list of insights for account $a$. Considering that this is based on secondary research, these insights would need closer scrutiny for contextual and combinatorial fitment and hence would be tagged under the "Explore" action category.

### *Pseudocode to generate the first set of insights:*

*For each account g in G*

*For each KPI k reported for account g*

*Calculate KPI delta $k_{del} = k_g - k_a$*

*If $k_{del}$ > pre-defined threshold*

*Add contributing factor of $k_g$ to insight list*

### *Pseudocode to generate the second set of insights:*

*For each historic time period n:*

*For each KPI k reported for account a*

*Calculate KPI delta kdel – $k_n$ - $k_{cur}$*

*If $k_{del}$ > pre-defined threshold*

*Add contributing factor of $k_n$ to insight list*

At step 216 of the method 200, one or more hardware processors 102 are configured by the programmed instructions to update the dynamic coefficient associated with each of the plurality of relevant KPIs associated with each of the plurality of enterprise accounts includes the following steps. Initially, a self-learning control factor configured for each of the plurality of enterprise accounts is received, wherein the self-learning control factor is either one or zero. Further, a moving average of the plurality of relevant KPIs associated with the plurality of similar accounts is computed. Further, a current delta dynamic coefficient is computed for each of the plurality of similar accounts based on the moving average. Finally, the dynamic coefficient associated with each of the plurality of relevant KPIs of the plurality of enterprise accounts are updated using a self-learning auto correlation if the current delta dynamic coefficient is greater than zero. For example, the self-learning auto correlation is calculated from the current delta dynamic coefficient and the self- learning control factor.

The present disclosure includes feedback / self-learning loop where in system has the intelligence based on the actual values to recalibrate the engine. In an embodiment, Standard Deviation (SD) is taken into consideration to do the self-learning auto-correction. To ensure, the data points are looked upon and analyzed how far are they from the moving averages. For example, let us assume account $a$ has an initial coefficient goal set for the "Innovation Events" attribute as 10. However, over a period of time, as accounts mature and the system data becomes actionable, the cohort average for this KPI is seen to be 12. The Self-Learning feedback loop automatically picks up this deviation in terms of a gap between the current target set and the moving average across the cohort and using the Self-Learning control parameter automatically update the target to 12. Pseudocode for the Self-Learning feedback loop is given below:

### Pseudocode for the Self-Learning feedback loop

controlVar =Retrieve Self-Learning Control Factor configured for account (0 to "switch off", 1 for "full switch on")

For each Cohort Account x in X

For each Coefficient c in Co-efficient master C

ca = value of c for account a

k = KPI value corresponding to Coefficient c for cohort account x

Calculate Cohort KPI Moving Average

cka = Moving Average (k) across Cohort x

Calculate current coefficient delta from cohort moving average • cdel = cka - ca

If (cdel > 0) then • Self-learning auto-correction slac = cdel * controlVar

Update ca = ca + slac

Else

Continue with the same pre-defined threshold

End

Next c

Next x

At step 218 of the method 200, one or more hardware processors 102 are configured by the programmed instructions to compute an innovation score percentile for each of the plurality of enterprise accounts based on an updated dynamic coefficient associated with each of the plurality of relevant KPIs. The formula for computing the innovation score percentile P is given as *P = Number of accounts ranked same or lower / total number of accounts *100 where, accounts are ranked based on their innovation score.*

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address the unresolved problem of innovation velocity measurement. The present disclosure performs streamlined process for real-time collection of multidimension Enterprise data for innovation. Further, the present disclosure includes contextual relevance filter to filter only relevant data items being reported. Furthermore, standardized calculation engine is used to measure innovation velocity and configurable normalization engine is used to scale scores for different accounts to a single standard scale. Furthermore, the present disclosure includes dashboards and insights to share a gamified view of innovation velocity and enable informed decisions. Finally, the present disclosure includes self-learning feedback Loop to continuously adjust the relevant dynamic coefficients.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200), the method comprising:

receiving (202), by one or more hardware processors, a multidimensional data pertaining to a plurality of enterprise accounts, wherein the multidimensional data comprises at least one of a set of structured data and a set of unstructured data;
identifying (204), by the one or more hardware processors, a plurality of potential Key Performance Indicators (KPIs) by mapping a plurality of predefined KPIs with the multidimensional data;
selecting (206), by the one or more hardware processors, a plurality of relevant KPIs associated with each of the plurality of enterprise accounts from among a plurality of potential KPIs using a classification technique, wherein each of the plurality of relevant KPIs are associated with a dynamic coefficient, wherein the dynamic coefficient is updated based on context and focus of the plurality of enterprise accounts;
computing (208), by the one or more hardware processors, a raw innovation factor for each of the plurality of enterprise accounts based on a weighted score associated with each of the corresponding plurality of relevant KPIs and the dynamic coefficient associated with each of the plurality of relevant KPIs;
computing (210), by the one or more hardware processors, a scaled innovation score for each of the plurality of enterprise accounts by applying a set of pre-defined normalization rules on the corresponding raw innovation factor, wherein the set of pre-defined normalization rules for each of the plurality of enterprise accounts are generated based on size, headcount and revenue associated with a corresponding enterprise account;
identifying (212), by the one or more hardware processors, a plurality of similar enterprise accounts corresponding to each of the plurality of enterprise accounts based on the corresponding scaled innovation score using an Euclidean distance based approach;

generating (214), by the one or more hardware processors, a plurality of recommendations comprising a first set of insights, a second set of insights and a third set of insights to a user based on the plurality of similar enterprise accounts corresponding to each of the plurality of enterprise accounts;

updating (216), by the one or more hardware processors, the dynamic coefficient associated with each of the plurality of relevant KPIs associated with each of the plurality of enterprise accounts by:

> obtaining a self-learning control factor configured for each of the plurality of enterprise accounts, wherein the self-learning control factor is either one or zero;
> computing a moving average of the plurality of relevant KPIs associated with the plurality of similar accounts;
> computing a current delta dynamic coefficient for each of the plurality of similar accounts based on the moving average; and
> updating the dynamic coefficient associated with each of the plurality of relevant KPIs of the plurality of enterprise accounts using a self-learning auto correlation if the current delta dynamic coefficient is greater than zero, wherein the self-learning auto correlation is calculated from the current delta dynamic coefficient and the self- learning control factor; and

> computing (218), by the one or more hardware processors, an innovation score percentile for each of the plurality of enterprise accounts based on an updated dynamic coefficient associated with each of the plurality of relevant KPIs.

2. The method as claimed in claim 1, wherein the multidimensional data comprises data associated with (i) culture and behaviour, (ii) positioning and mindshare and (iii) innovation outcomes.

3. The method as claimed in claim 1, wherein steps for generating the plurality of recommendations comprising the first set of insights, the second set of insights and the third set of insights to the user based on the plurality of similar enterprise accounts corresponding to each of the plurality of enterprise accounts comprises:

> computing a first delta KPI for each of the plurality of similar enterprise accounts based on a comparison between the dynamic coefficient associated with each of the plurality of relevant KPIs corresponding to each of the plurality of enterprise accounts and the dynamic coefficient associated with each of the plurality of relevant KPIs corresponding to each of the plurality of similar enterprise accounts;
> generating the first set of insights by including a contributing factor associated with the relevant KPIs of corresponding plurality of similar accounts having if the first delta KPI is greater than a predefined first threshold;
> computing a second delta KPI for each of the plurality of enterprise accounts in a plurality of timelines based on a comparison between the dynamic coefficient associated with the corresponding relevant KPI in each of a plurality of historic timelines and the dynamic coefficient associated with the corresponding relevant KPI at current timeline;
> generating the second set of insights by including a contributing factor associated with the relevant KPIs of corresponding to each of the plurality of historic timelines if the second delta KPI is greater than a predefined second threshold; and
> generating the third set of insights based on a plurality of attributes using a generative Artificial Intelligence (GenAI) based approach, wherein the plurality of attributes comprises industry type, market, technology trends, competitive landscape, geography, business priorities, innovation ecosystem.

4. A system (100) comprising:
   at least one memory (104) storing programmed instructions; one or more Input /Output (I/O) interfaces (112); and one or more hardware processors (102) operatively coupled to the at least one memory (104), wherein the one or more hardware processors (102) are configured by the programmed instructions to:

   > receive a multidimensional data pertaining to a plurality of enterprise accounts, wherein the multidimensional data comprises at least one of a set of structured data and a set of unstructured data;
   > identify a plurality of potential Key Performance Indicators (KPIs) by mapping a plurality of predefined KPIs with the multidimensional data;
   > select a plurality of relevant KPIs associated with each of the plurality of enterprise accounts from among a plurality of potential KPIs using a classification technique, wherein each of the plurality of relevant KPIs are associated with a dynamic coefficient, wherein the dynamic coefficient is updated based on context and focus of the plurality of enterprise accounts;

compute a raw innovation factor for each of the plurality of enterprise accounts based on a weighted score associated with each of the corresponding plurality of relevant KPIs and the dynamic coefficient associated with each of the plurality of relevant KPIs;

compute a scaled innovation score for each of the plurality of enterprise accounts by applying a set of pre-defined normalization rules on the corresponding raw innovation factor, wherein the set of pre-defined normalization rules for each of the plurality of enterprise accounts are generated based on size, headcount and revenue associated with a corresponding enterprise account;

identify a plurality of similar enterprise accounts corresponding to each of the plurality of enterprise accounts based on the corresponding scaled innovation score using an Euclidean distance based approach;

generate a plurality of recommendations comprising a first set of insights, a second set of insights and a third set of insights to a user based on the plurality of similar enterprise accounts corresponding to each of the plurality of enterprise accounts;

update the dynamic coefficient associated with each of the plurality of relevant KPIs associated with each of the plurality of enterprise accounts by:

obtaining a self-learning control factor configured for each of the plurality of enterprise accounts, wherein the self-learning control factor is either one or zero;

computing a moving average of the plurality of relevant KPIs associated with the plurality of similar accounts;

computing a current delta dynamic coefficient for each of the plurality of similar accounts based on the moving average; and

updating the dynamic coefficient associated with each of the plurality of relevant KPIs of the plurality of enterprise accounts using a self-learning auto correlation if the current delta dynamic coefficient is greater than zero, wherein the self-learning auto correlation is calculated from the current delta dynamic coefficient and the self- learning control factor; and

compute an innovation score percentile for each of the plurality of enterprise accounts based on an updated dynamic coefficient associated with each of the plurality of relevant KPIs.

5. The system of claim 4, wherein the multidimensional data comprises data associated with (i) culture and behaviour, (ii) positioning and mindshare and (iii) innovation outcomes.

6. The system of claim 4, wherein steps for generating the plurality of recommendations comprising the first set of insights, the second set of insights and the third set of insights to the user based on the plurality of similar enterprise accounts corresponding to each of the plurality of enterprise accounts comprises:

computing a first delta KPI for each of the plurality of similar enterprise accounts based on a comparison between the dynamic coefficient associated with each of the plurality of relevant KPIs corresponding to each of the plurality of enterprise accounts and the dynamic coefficient associated with each of the plurality of relevant KPIs corresponding to each of the plurality of similar enterprise accounts;

generating the first set of insights by including a contributing factor associated with the relevant KPIs of corresponding plurality of similar accounts having if the first delta KPI is greater than a predefined first threshold;

computing a second delta KPI for each of the plurality of enterprise accounts in a plurality of timelines based on a comparison between the dynamic coefficient associated with the corresponding relevant KPI in each of a plurality of historic timelines and the dynamic coefficient associated with the corresponding relevant KPI at current timeline;

generating the second set of insights by including a contributing factor associated with the relevant KPIs of corresponding to each of the plurality of historic timelines if the second delta KPI is greater than a predefined second threshold; and

generating the third set of insights based on a plurality of attributes using a generative Artificial Intelligence (GenAI) based approach, wherein the plurality of attributes comprises industry type, market, technology trends, competitive landscape, geography, business priorities, innovation ecosystem.

7. One or more non-transitory machine-readable information storage mediums comprising one or more instructions which when executed by one or more hardware processors cause:

receiving a multidimensional data pertaining to a plurality of enterprise accounts, wherein the multidimensional data comprises at least one of a set of structured data and a set of unstructured data;

identifying a plurality of potential Key Performance Indicators (KPIs) by mapping a plurality of predefined KPIs with the multidimensional data;

selecting a plurality of relevant KPIs associated with each of the plurality of enterprise accounts from among a plurality of potential KPIs using a classification technique, wherein each of the plurality of relevant KPIs are associated with a dynamic coefficient, wherein the dynamic coefficient is updated based on context and focus of the plurality of enterprise accounts;

computing a raw innovation factor for each of the plurality of enterprise accounts based on a weighted score associated with each of the corresponding plurality of relevant KPIs and the dynamic coefficient associated with each of the plurality of relevant KPIs;

computing a scaled innovation score for each of the plurality of enterprise accounts by applying a set of pre-defined normalization rules on the corresponding raw innovation factor, wherein the set of pre-defined normalization rules for each of the plurality of enterprise accounts are generated based on size, headcount and revenue associated with a corresponding enterprise account;

identifying a plurality of similar enterprise accounts corresponding to each of the plurality of enterprise accounts based on the corresponding scaled innovation score using an Euclidean distance based approach;

generating a plurality of recommendations comprising a first set of insights, a second set of insights and a third set of insights to a user based on the plurality of similar enterprise accounts corresponding to each of the plurality of enterprise accounts;

updating the dynamic coefficient associated with each of the plurality of relevant KPIs associated with each of the plurality of enterprise accounts by:

obtaining a self-learning control factor configured for each of the plurality of enterprise accounts, wherein the self-learning control factor is either one or zero;

computing a moving average of the plurality of relevant KPIs associated with the plurality of similar accounts;

computing a current delta dynamic coefficient for each of the plurality of similar accounts based on the moving average; and

updating the dynamic coefficient associated with each of the plurality of relevant KPIs of the plurality of enterprise accounts using a self-learning auto correlation if the current delta dynamic coefficient is greater than zero, wherein the self-learning auto correlation is calculated from the current delta dynamic coefficient and the self-learning control factor; and

computing (218), by the one or more hardware processors, an innovation score percentile for each of the plurality of enterprise accounts based on an updated dynamic coefficient associated with each of the plurality of relevant KPIs.

8. The one or more non-transitory machine-readable information storage mediums of claim 7, wherein the multidimensional data comprises data associated with (i) culture and behaviour, (ii) positioning and mindshare and (iii) innovation outcomes.

9. The one or more non-transitory machine-readable information storage mediums of claim 7, wherein steps for generating the plurality of recommendations comprising the first set of insights, the second set of insights and the third set of insights to the user based on the plurality of similar enterprise accounts corresponding to each of the plurality of enterprise accounts comprises:

computing a first delta KPI for each of the plurality of similar enterprise accounts based on a comparison between the dynamic coefficient associated with each of the plurality of relevant KPIs corresponding to each of the plurality of enterprise accounts and the dynamic coefficient associated with each of the plurality of relevant KPIs corresponding to each of the plurality of similar enterprise accounts;

generating the first set of insights by including a contributing factor associated with the relevant KPIs of corresponding plurality of similar accounts having if the first delta KPI is greater than a predefined first threshold;

computing a second delta KPI for each of the plurality of enterprise accounts in a plurality of timelines based on a comparison between the dynamic coefficient associated with the corresponding relevant KPI in each of a plurality of historic timelines and the dynamic coefficient associated with the corresponding relevant KPI at current timeline;

generating the second set of insights by including a contributing factor associated with the relevant KPIs of corresponding to each of the plurality of historic timelines if the second delta KPI is greater than a predefined second threshold; and

generating the third set of insights based on a plurality of attributes using a generative Artificial Intelligence (GenAI) based approach, wherein the plurality of attributes comprises industry type, market, technology trends, competitive landscape, geography, business priorities, innovation ecosystem.

100

FIG. 1A

FIG. 1B

200

receive a multidimensional data pertaining to a plurality of enterprise accounts, wherein the multidimensional data comprises at least one of a set of structured data and a set of unstructured data — 202

identify a plurality of potential Key Performance Indicators (KPIs) by mapping a plurality of predefined KPIs with the multidimensional data — 204

select a plurality of relevant KPIs associated with each of the plurality of enterprise accounts from among a plurality of potential KPIs using a classification technique, wherein each of the plurality of relevant KPIs are associated with a dynamic coefficient, wherein the dynamic coefficient is updated based on context and focus of the plurality of enterprise accounts — 206

compute a raw innovation factor for each of the plurality of enterprise accounts based on a weighted score associated with each of the corresponding plurality of relevant KPIs and the dynamic coefficient associated with each of the plurality of relevant KPIs — 208

compute a scaled innovation score for each of the plurality of enterprise accounts by applying a set of pre-defined normalization rules on the corresponding raw innovation factor, wherein the set of pre-defined normalization rules for each of the plurality of enterprise accounts are generated based on size, headcount and revenue associated with a corresponding enterprise account — 210

A

**FIG. 2A**

(A)

identify a plurality of similar enterprise accounts corresponding to each of the plurality of enterprise accounts based on the corresponding scaled innovation score using an Euclidean distance based approach

212

generate a plurality of recommendations comprising a first set of insights, a second set of insights and a third set of insights to a user based on the plurality of similar enterprise accounts corresponding to each of the plurality of enterprise accounts

214

update the dynamic coefficient associated with each of the plurality of relevant KPIs associated with each of the plurality of enterprise accounts by: (i) obtaining a self-learning control factor configured for each of the plurality of enterprise accounts, wherein the self-learning control factor is either one or zero (ii) computing a moving average of the plurality of relevant KPIs associated with the plurality of similar accounts (iii) computing a current delta dynamic coefficient for each of the plurality of similar accounts based on the moving average and (iv) updating the dynamic coefficient associated with each of the plurality of relevant KPIs of the plurality of enterprise accounts using a self-learning auto correlation if the current delta dynamic coefficient is greater than zero, wherein the self-learning auto correlation is calculated from the current delta dynamic coefficient and the self-learning control factor

216

compute an innovation score percentile for each of the plurality of enterprise accounts based on an updated dynamic coefficient associated with each of the plurality of relevant KPIs

218

**FIG. 2B**

FIG. 3

**EUROPEAN SEARCH REPORT**

Europäisches
Patentamt
European
Patent Office
Office européen
des brevets

**Application Number**

EP 25 15 3980

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/090088 A1 (ARORA PRITPAL [IN] ET AL) 19 March 2020 (2020-03-19) <br> * paragraphs [0004] - [0006], [0019] - paragraphs [0030], [0036] - [0040] * <br> * paragraph [0045] - paragraphs [0064], [0079] - [0083], [0110] * <br> * figures 1-4, 6-8 * | 1-9 | INV.<br>G06Q10/0639<br>G06Q10/067 |
| X | Hammergren Thomas C. ET AL: "Data Warehousing For Dummies, 2nd Edition", 3 March 2009 (2009-03-03), For Dummies, XP093283741, ISBN: 978-0-470-40747-9 <br> * pages 3-5,40 - page 54 * <br> * pages 111,120 - page 121 * <br> * page 136 - page 158 * <br> * page 299 - page 303 * | 1-9 | |
| X | US 2020/104775 A1 (CHINTALAPATI RENU [US] ET AL) 2 April 2020 (2020-04-02) <br> * paragraphs [0022] - [0041], [0050] - paragraph [0051]; figure 1 * <br> * paragraphs [0054] - [0064], [0115] - paragraph [0123] * | 1-9 | **TECHNICAL FIELDS SEARCHED (IPC)** <br><br> G06Q <br> G06N |
| X | US 2015/324726 A1 (LI TA-HSIN [US] ET AL) 12 November 2015 (2015-11-12) <br> * paragraphs [0003] - [0004], [0026] - paragraph [0040] * <br> * paragraph [0056] - paragraphs [0077], [0102] - [0106]; figure 1 * | 1-9 | |

-/--

The present search report has been drawn up for all claims

| Place of search | Date of completion of the search | Examiner |
|---|---|---|
| Munich | 4 June 2025 | Krafft, Gerald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...................................................................
& : member of the same patent family, corresponding document

EPO FORM 1503 03.82 (P04C01)

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Marrone Angelica: "Optimizing Product Development and Innovation Processes with Artificial Intelligence" In: "Master's thesis", 1 July 2023 (2023-07-01), POLITECNICO DI TORINO, IT, XP093272647, pages 1-90, Retrieved from the Internet: URL:https://webthesis.biblio.polito.it/secure/27710/1/tesi.pdf> * pages 1-2,9 - pages 11,14-22 * * page 36 - pages 49,62-64 * ----- | 1-9 | |

**TECHNICAL FIELDS SEARCHED    (IPC)**

The present search report has been drawn up for all claims

| Place of search | Date of completion of the search | Examiner |
|---|---|---|
| Munich | 4 June 2025 | Krafft, Gerald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

page 2 of 2

**ANNEX TO THE EUROPEAN SEARCH REPORT
ON EUROPEAN PATENT APPLICATION NO.**

EP 25 15 3980

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2025

| Patent document cited in search report | Publication date | Patent family member(s) | Publication date |
|---|---|---|---|
| US 2020090088 A1 | 19-03-2020 | NONE | |
| US 2020104775 A1 | 02-04-2020 | CN 112970039 A | 15-06-2021 |
| | | JP 2022503842 A | 12-01-2022 |
| | | JP 2024096906 A | 17-07-2024 |
| | | US 2020104775 A1 | 02-04-2020 |
| | | WO 2020069393 A1 | 02-04-2020 |
| US 2015324726 A1 | 12-11-2015 | US 2015302337 A1 | 22-10-2015 |
| | | US 2015324726 A1 | 12-11-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421016967